(19) **Europäisches Patentamt / European Patent Office / Office européen des brevets**

(11) **EP 4 624 604 A1**

(12) **EUROPEAN PATENT APPLICATION**

(43) Date of publication:
**01.10.2025 Bulletin 2025/40**

(21) Application number: **24305477.2**

(22) Date of filing: **28.03.2024**

(51) International Patent Classification (IPC):
**C22C 1/04** (2023.01)  **C22C 27/02** (2006.01)
**C22C 30/00** (2006.01)  **C22C 30/02** (2006.01)
**C22C 30/06** (2006.01)  **C22C 33/02** (2006.01)
**B33Y 70/00** (2020.01)

(52) Cooperative Patent Classification (CPC):
**C22C 30/00; B33Y 70/00; C22C 1/04;
C22C 1/0433; C22C 27/02; C22C 30/02;
C22C 30/06; C22C 33/0285**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Centre National de la Recherche Scientifique**
  **75016 Paris (FR)**
• **Université de Lorraine**
  **54000 Nancy (FR)**
• **Ecole Nationale Supérieure d'Arts et Métiers**
  **75013 Paris (FR)**

(72) Inventors:
• **Laheurte, Pascal**
  **57600 Forbach (FR)**
• **Peltier, Laurent**
  **57645 Nouilly (FR)**
• **Meraghni, Fodil**
  **57155 Marly (FR)**
• **Berveiller, Sophie**
  **57530 Courcelles-Chaussy (FR)**
• **Le Coz, Gaël**
  **57070 Metz (FR)**

(74) Representative: **Bandpay & Greuter**
  **11 rue Christophe Colomb**
  **75008 Paris (FR)**

(54) **HIGH ENTROPY ALLOYS AND THEIR USE FOR ADDITIVE MANUFACTURING**

(57)  The present invention relates to an alloy comprising Cr, Fe, Ni, Nb and Ta wherein each of these elements are comprised in the alloy in an amount comprised between 5 and 40 at.% and the use of this alloy in additive manufacturing processes and in mechanical part subjected to mechanical stresses at high temperature.

**EP 4 624 604 A1**

## Description

## Technical field

The present invention relates to high entropy alloys and their use for additive manufacturing.

## Background art

Inconel alloys are extensively used in industry, especially in aeronautics and aerospace. They have been employed since the 1970s due to their good mechanical properties at high temperatures and their good resistance to corrosion and oxidation. One of the most widely used alloys is Inconel® 718, which is a nickel-based superalloy exhibiting a relative moderate entropy and comprising 50 at% of Ni, 20 to 26 at% of Cr, 20 to 23 at% of Fe, 2.5 at% of Nb and 2.5 at% of Ta.

The High Entropy Alloys (HEAs) or Complex-Concentrated Alloys (CCAs) often have higher service temperatures than conventional low or medium-entropy alloys. Inconel class metals are multiphase alloys composed of a soft matrix, lava phases (30% harder than the matrix) and carbides (120% harder than the matrix). This combination of soft and hard phases confers to the Inconel relevant mechanical performance at high temperatures due to the residual internal stresses. However, the Inconel has several drawbacks, which are induced by the properties contrast of its constitutive phases. In fact, the hardness contrast between the matrix, the lava phases and carbides generally cause an abnormal and excessive tool wear during the machining and finishing processes. In addition, it must be noted that the presence of hard phases in a soft matrix induces a low material removal rate and a poor surface integrity. This aspect is particularly important in aerospace or nuclear applications needing a high level of reliability.

There is thus a need to provide new alloy that presents good mechanical properties at high temperatures and good resistance to corrosion and oxidation but also that are compatible with machinability and finishing processes.

There is also a need to provide such alloy that can be used in additive manufacturing.

## Summary of the invention

The present invention relates to an alloy comprising Cr, Fe, Ni, Nb and Ta wherein each of these elements are comprised in the alloy in an amount comprised between 5 and 40 at.%.

Preferably in the alloy :

the amount of Cr is comprised between 3 and 40 at.%, preferably between 5 and 35 at.%;
the amount of Fe is comprised between 3 and 40 at.%, preferably between 5 and 35at.%;
the amount of Ni is comprised between 3 and 40 at.%, preferably between 5 and 35 at.%;
the amount of Nb is comprised between 3 and 35 at.%, preferably between 5 and 20at.%; and
the amount of Ta is comprised between 3 and 35 at.%, preferably between 5 and 20 at.%.

The alloy can further comprising:

at least one of V, Mn, Co, Cu, Zn, Mo or W in an amount comprised between 0.5 and 20 at.%, preferably comprised between 0.5 and 16 at.%; and/or
at least one of Ti, Zr, Hf or Al in an amount comprised between 0.5 and 10 at.%, preferably between 0.5 and 5 at.%; and/or
at least one of B, C, N, O Si, P or S in an amount of at most 1 at.%, preferably comprised between 0.1 and 0,5 at.%.

Preferably, the alloy according to any one of claims 1 to 3 that does not comprise Al, Co, Si, Be and/or C.

Preferably, in the alloy, $\Delta s_{mix} / R \geq 1,5$

$$|\Delta S_{mix}| = -R \sum_{i=1}^{n} (x_i \ln (xi))$$

wherein R is the universal gas constant, n is the number of element in the alloy, xi is molar concentration of the element i of the alloy.

Preferably, the alloy consists of Cr, Fe, Ni, Nb and Ta, and preferably the alloy is chosen among $Cr_{32}Fe_{26}Ni_{23}Nb_{9,5}Ta_{9,5}$ and $Cr_{35}Fe_{23}Ni_{30}Nb_5Ta_5$.

The invention also relates to a process for the preparation of the alloy comprising the step of mixing the elements constituting the alloy in a cold crucible.

Preferably, the mixture undergoes from 4 to 10 cycles of melting and solidification.

The invention also relates to :

- a process of additive manufacturing implementing the alloy;
- element made from the alloy, preferably mechanical part subjected to mechanical stress at high temperatures, preferably a mechanical part of a motor or turbine, gas turbine, rocket engine, resorts and attachments, refrigerated tanks, pumps and valves, tools and equipment, for example mechanical part used in aeronautics, nuclear plant, automobile.

## Brief description of the Figure

Figure 1 shows the SEM observation for Inconel® 718 alloy (figure 1a), Alloy 2 (figure 1b) and alloy 1 (figure 1c).

Figure 2 represents the results of hardness for Inconel® 718®, alloy 1 and alloy 2 over temperature.
Figure 3 represents the evolution of wear using Alloy 1, Alloy 2 or Inconel®718.
Figure 4 represents the roughness (Ra) measured at the bottom of the groove in the feed direction as a function of the machined cutting length.

**Detailed description**

The invention is now described with respect to the following non limiting examples.
The present invention relates to an alloy comprising, preferably consisting of, Cr, Fe, Ni, Nb and Ta wherein each of these elements are comprised in the alloy in an amount comprised between 5 and 40 at.%.
Preferably, in the alloy of the invention:

the amount of Cr is comprised between 3 and 40 at.%, preferably between 5 and 35 at.%, preferably between 20 and 40 at.%, preferably between 25 and 35 at.%, more preferably between 30 and 35 at.% ;
the amount of Fe is comprised between 3 and 40 at.%, preferably between 5 and 35at.%, preferably between 15 and 30 at.%, preferably between 20 and 30 at.%, more preferably between 25 and 30 at.%;
the amount of Ni is comprised between 3 and 40 at.%, preferably between 5 and 35 at.%, preferably between 20 and 40 at.%, preferably between 20 and 35 at.%, more preferably between 20 and 30 at.%;
the amount of Nb is comprised between 5 and 35 at.%, preferably between 5 and 20 at.%, preferably between 5 and 15 at.%, preferably between 5 and 10 at.%; and
the amount of Ta is comprised between 5 and 35 at.%, preferably between 5 and 20 at.%, preferably between 5 and 15 at.%, preferably between 5 and 10 at.%.

Preferably, in the alloy according to the invention, the amount of Nb is equal to the amount of Ta.
Preferably, the alloy according to the invention comprises, preferably consists of, Cr, Fe, Ni, Nb and Ta, wherein the total amount of Cr, Fe and Ni is comprised between 70 and 90 at%, preferably between 75 and 90 at.%, and the total amount of Ta and Nb is comprised between 10 and 30 at.%, preferably between 10 and 25 at.%.
Preferably, the alloy according to the invention comprises, preferably consists of, Cr, Fe, Ni, Nb and Ta, wherein the total amount of Cr, Fe and Ni is comprised between 70 and 90 at%, preferably between 75 and 90 at.%, and the total amount of Ta and Nb is comprised between 10 and 30 at.%, preferably between 10 and 25 at.%, and wherein

- the amount of Cr is comprised between 25 and 35 at%, preferably between 30 and 35 at%;

- the amount of Fe is comprised between 20 and 30 at.%, preferably between 25 and 30 at.%;
- the amount of Ni is comprised between 20 and 35 at.%, preferably between 20 and 30 at.%;
- the amount of Ta is equal to the amount of Nb.

The alloy according to the invention can also comprise further element and especially :

- at least one of V, Mn, Co, Cu, Zn, Mo or W, preferably V, in an amount comprised between 0.5 and 20 at.%, preferably comprised between 0.5 and 16 at.%; preferably between 2 and 10 at.% and/or
- at least one of Ti, Zr, Hf or Al in an amount comprised between 0.5 and 10 at.%, preferably between 0.5 and 5 at.%; and/or
- at least one of B, C, N, O Si, P or S in an amount of at most 1 at.%, preferably comprised between 0.1 and 0.5 at.%.

In an embodiment, the alloy according to the invention can also comprise V in an amount comprised between 0.5 and 16 at.%, preferably between 2 and 10 at.%.
In an embodiment, the present invention relates to an alloy comprising, preferably consisting of, Cr, Fe, Ni, V, Nb and Ta, wherein:

- the total amount of Cr, Fe and Ni is w and w is comprised between 75 and 94 at. %, preferably comprised between 78 and 84 at.%, for example 79 at.%;
- the amount of V is z with z is comprised between 0 and 13 at.%, preferably comprised between 0 and 7 at.%, for example z is 3, 5 or 7;
- the amount of Nb and of Ta is (100-w-z)/2;
- the amount of Cr is comprised between 25 and 35 at%, preferably between 30 and 35 at%;
- the amount of Fe is comprised between 20 and 30 at.%, preferably between 25 and 30 at.%;
- the amount of Ni is comprised between 20 and 35 at.%, preferably between 20 and 30 at.%.

For example in such embodiment, the preferred alloy is $(CrFeNi)_{79}V_zNb_{((21-z)/2)}T_{((21-z)/2)}$ and z is 3, 5 or 7.
Preferably, the alloy according to the invention does not comprise Al, Co, Si, Be and/or C.
Preferably, the alloy of the invention consists of Cr, Fe, Ni, Nb and Ta.
More preferably, the alloy is chosen among $Cr_{32}Fe_{26}Ni_{23}Nb_{9,5}Ta_{9,5}$ and $Cr_{35}Fe_{25}Ni_{30}Nb_5Ta_5$.
Advantageously, the alloy according to the invention presents a $\Delta s_{mix} / R \geq 1{,}5$, wherein

$$|\Delta S_{mix}| = -R \sum_{i=1}^{n} (x_i \ln(xi))$$

R is the universal gas constant

n is the number of element in the alloy

xi is molar concentration of the element i of the alloy accordingly, the alloy according to the invention is a high entropy alloy (HEA).

Advantageously, the alloy according to the invention is a high entropy alloy and is a multiphase alloy which enables to obtain alloy that is machinable and has:

- an excellent resistance to high temperature for example 650-800°C and at least a resistance equivalent to the resistance of Inconel® 718 at temperature between 650 and 800°C. For example Vickers hardness (measured according to ISO 4545-1:2023 or ISO 6507-1 : 2023) of 400 HV at 300°C or greater than 300 HV at 600°C;
- a high resistance to wear, especially due to a high hardness; preferably an increased resistance to wear compared to Inconel® 718.

The alloy according to the invention can thus advantageously be used in any mechanical part subjected to mechanical stress at high temperatures (for example 650-800°C). The alloy according to the invention can thus advantageously been used in any pieces subjected to mechanical stress at high temperature in the field of automotive, aeronautics and nuclear plant, for example in mechanical part of a motor or turbine.

The present invention also relates to a process for the preparation of the alloy as described above, comprising the step of mixing the elements constituting the alloy in a cold crucible. Such process is generally known by the skilled person.

Preferably, the mixture of elements undergoes from 4 to 10 cycles of melting and solidification to homogenize the mixture.

Due to the difference of melting temperature of the different element it can be necessary to add the elements in a specific order to avoid loss of element during the process. Especially, Ta has a melting temperature that is higher than the evaporation temperature of chromium. The progressive production of the alloy NbTa with a melting temperature less than 2700°C is made incrementally in four steps where the Ta content is deceased progressively. The advantage of using a master alloy NbTa produced progressively is to have an alloy whose melting temperature is lower than the melting temperature of the three other elements (Cr=2672°C, Fe =2750°C, and Ni =2732°C). Then preferably Fe is added in the alloy TaNb and preferably, the end of the casting process corresponds to the addition of chromium and nickel to the alloy NbTaFe.

The process in cold crucible is preferably made under a controlled atmosphere of ultra-pure argon especially to prevent the formation of oxides.

The process is preferably carried out by mixing the elements in the powder form preferably in the pure powder form.

Advantageously, the alloy according to the invention can be used in additive manufacturing processes. Accordingly, the present invention relates to a process of additive manufacturing implementing the alloy according to the invention.

The present invention also relates to an element made from the alloy according to the invention. This element can be mase as cast or by additive manufacturing processes. The element is preferably a mechanical part subjected to mechanical stress at high temperatures (for example 650-800°C), preferably it is a piece subjected to mechanical stress at high temperature in the field of automotive, aeronautics and nuclear plant, for example in mechanical part of a motor or turbine, mechanical part of gas turbine, rocket engine, resorts and attachments, refrigerated tanks, pumps and valves, tools and equipment.

The present invention will now been described based on the following non limiting examples.

## Examples

## Preparation of the alloys

Two alloys according to the invention have been prepared following a process comprising the fusion in a oven at a temperature above 3020°C (higher temperature of the different element of the alloy) of a mixture of each element of the alloy and homogenization by 10 cycles of melting and solidification each cycle having a duration of 10 minutes. Then a ingot is produced in a mold.

- alloy 1 ($Cr_{32}Fe_{26}Ni_{23}Nb_{9,5}Ta_{9,5}$)
- alloy 2 ($Cr_{35}Fe_{25}Ni_{30}Nb_5Ta_5$)

## Characterization of the structures

The microstructure observations have been performed using a Zeiss Supra 40 field emission gun scanning electron microscope (FEG-SEM). The chemical composition of the studied samples has been analyzed by EDX (Energy dispersive X-ray spectrometry). The crystallographic phases have been identified and analyzed through Rigaku X-ray diffraction (XRD) using Cu-Ka radiation at room temperature. The XRD analysis has been performed before and after heat treatment according to XRD powder mode using an accelerating voltage of 40 kV and an intensity of 30 mA. The diffractograms were indexed with suitable softwares (Maud and CaRIne) that allow the determination of the crystallographic structures and their lattice parameters.

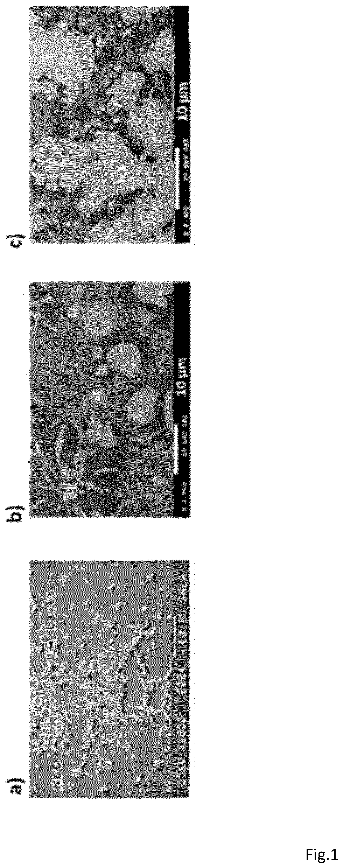

Figure 1 shows the SEM observation for Inconel® 718 alloy (figure 1a), Alloy 2 (figure 1b) and alloy 1 (figure 1c).

Different phases can be noticed in the Inconel®

718 alloy like metallic carbides or lava phases with high hardness. These metallic phases confer to the Inconel 718 alloy a high level of hardness making it difficult to machine. They cause more wear to the cutting tools reducing hence their durability. In Figure 1b and Figure 1c, the SEM observations reveal that both alloy 1 and alloy 2 exhibit three distinct phases. Conversely to the Inconel® 718, where the carbides and lava phases are present in low proportions, these constituting phases are comprised in higher proportions in alloy 1 and alloy 2 according to the invention.

For alloy 1: $\Delta s_{mix}/R = 1,5$

For Inconel® 718 : $\Delta s_{mix}/R = 1,33$

## Hardness tests

A mechanical macro hardness tester (indenter) has been utilized for determining the hardness of the three alloys in a wide range of temperatures (from 25°C to 800°C). The indentation load is 30N and the tests are repeated 3 times for each temperature and each alloy. The indentation test device has been modified to reach an operating temperature up to 800°C. To this end, a heating plate controlled by an optical pyrometer ensures the heating of the sample, which is positioned in an insulating enclosure during the test. The length of the indenter setup has been modified for hot testing and the hardness measurements are carried out once the sample gets cooled down completely.

## Machinability analysis

For the three studied alloys, the cutting operations have been performed on a Roeders RXP200DS 5 axes high-speed machining center (3000 - 6000 rpm). The selected cutting tools are solid micro grain tungsten carbide (WC) with 4 mm diameter, two flute ball nose end mills with a helix angle of 30°, and a nanocoating AlCrN (3200HV). The Flank wear (Vb) has been repeatedly measured with a Tesa Visio microscope having digital micrometer heads. Workpiece surfaces are observed with a Leica DCM3D allowing hence to extract the surface roughness (Ra) for both new and worn cutting tools that are taken parallel to the feed direction. The performed machining tests are finish-milling operations with fixed operating parameters that involve a maximum peripheral cutting speed of 45 m/min, a feed per tooth of 0.080 mm, and a stepover depth of cut of 0.1 mm. The cutting conditions chosen are appropriate for a finish-machining regime. All machining trials are performed in down milling and dry conditions. a horizontal downwards orientation with the workpiece inclined/tilted at 45° is chosen to lead to a cutting speed variation along the tool-workpiece contact region from 45% to 89% of the programmed diameter speed. The cutting length for each pass depends on the 20 mm width of the sample. It must be noted that between each pass, an offset of 0.5 mm is set.

## Results

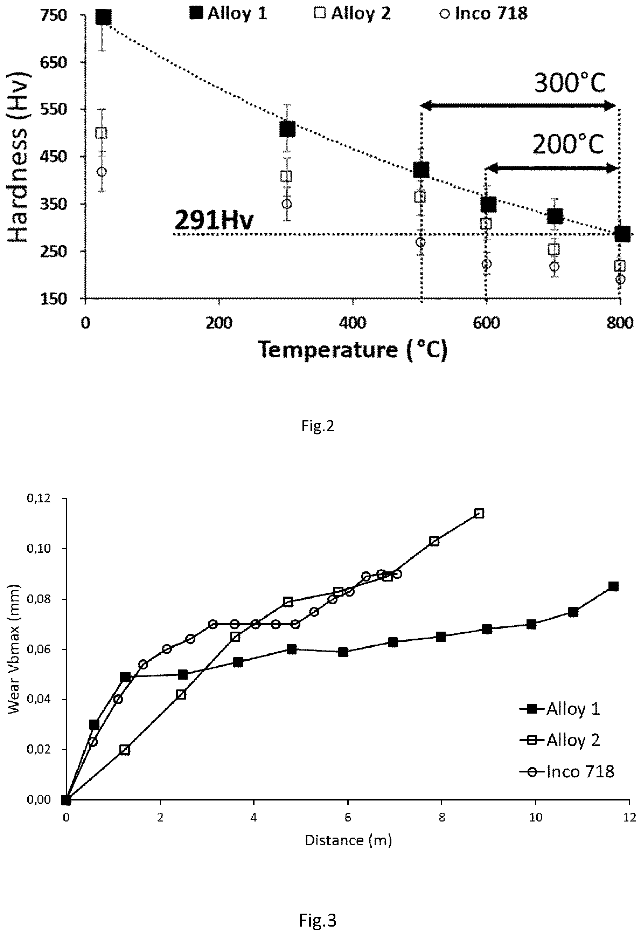

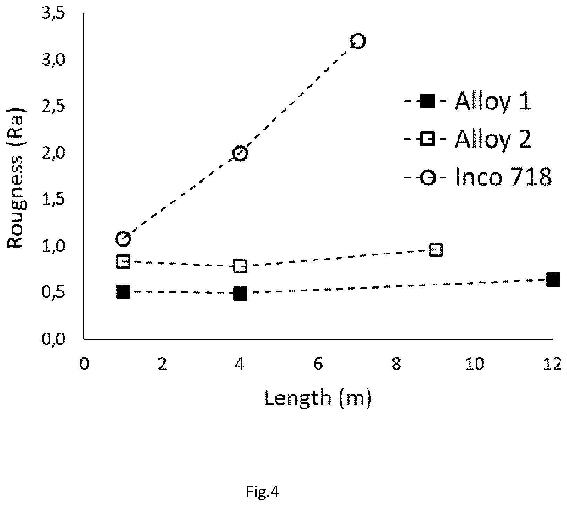

Figure 2 presents the results of hardness for Inconel® 718, alloy 1 and alloy 2.
Both alloy 1 and alloy 2 according to the invention presents higher hardness than Inconel 718® over a large temperature range.
Several grooves are machined to achieve substantial tool wear. The tests are stopped when a clearance wear Vb of the order of 0.1 mm is reached. The results are shown in figure 3
The degradation of the tools generates a progressive deterioration of the surfaces. The evolution of the roughness Ra, measured at the bottom of the groove in the feed direction, is therefore a relevant indicator of the progressive degradation. It is presented in Figure 4 as a function of the machined cutting length.
The apparent surface quality of Alloy 1 and Alloy 2 is much better than the Inconel® 718 surface.
The alloy according to the invention makes it possible to combine very good mechanical properties at high temperature, superior to those of the reference alloy (Inconel® 718). Furthermore, its better machinability has been proven with reference to Incone®718.

## Claims

1. Alloy comprising Cr, Fe, Ni, Nb and Ta wherein each of these elements are comprised in the alloy in an amount comprised between 5 and 40 at.%.

2. Alloy according to claim 1, wherein:

   the amount of Cr is comprised between 3 and 40 at.%, preferably between 5 and 35 at.%;
   the amount of Fe is comprised between 3 and 40 at.%, preferably between 5 and 35at.%;
   the amount of Ni is comprised between 3 and 40 at.%, preferably between 5 and 35 at.%;
   the amount of Nb is comprised between 3 and 35 at.%, preferably between 5 and 20at.%; and
   the amount of Ta is comprised between 3 and 35 at.%, preferably between 5 and 20 at.%.

3. Alloy according to claim 1 or 2, further comprising:

   - at least one of V, Mn, Co, Cu, Zn, Mo or W in an amount comprised between 0.5 and 20 at.%, preferably comprised between 0.5 and 16 at.%; and/or
   - at least one of Ti, Zr, Hf orAl in an amount comprised between 0.5 and 10 at.%, preferably between 0.5 and 5 at.%; and/or
   - at least one of B, C, N, O Si, P or S in an amount of at most 1 at.%, preferably comprised between 0.1 and 0,5 at.%.

4. Alloy according to any one of claims 1 to 3 that does not comprise Al, Co, Si, Be and/or C.

5. Alloy according to any one of claims for which $\Delta s_{mix}/R \geq 1,5$

$$|\Delta S_{mix}| = -R \sum_{i=1}^{n} (x_i \ln (xi))$$

R is the universal gas constant
n is the number of element in the alloy
xi is molar concentration of the element i of the alloy

6. Alloy according to any one of claims 1 to 5 consisting of Cr, Fe, Ni, Nb and Ta.

7. Alloy according to any one of claims 1 to 6 wherein the alloy is chosen among $Cr_{32}Fe_{26}Ni_{23}Nb_{9,5}Ta_{9,5}$ and $Cr_{35}Fe_{23}Ni_{30}Nb_5Ta_5$.

8. A process for the preparation of the alloy according to any one of claims 1 to 7 comprising the step of mixing the elements constituting the alloy in a cold crucible.

9. A process according to claim 8, wherein the mixture undergoes from 4 to 10 cycles of melting and solidification.

10. A process of additive manufacturing implementing the alloy according to any one of claims 1 to 7.

11. Element made from the alloy according to any one of claims 1 to 7.

12. Element according to claim 11 which is a mechanical part subjected to mechanical stress at high temperatures, preferably a mechanical part of a motor or turbine, gas turbine, rocket engine, resorts and attachments, refrigerated tanks, pumps and valves, tools and equipment.

13. Element according to claim 11 or 12 which is a mechanical part used in aeronautics, nuclear plant, automobile.

Fig.1

Fig.2

Fig.3

Fig.4

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHANG YUPENG ET AL: "Replacement of Ta with equi-atomic radius Nb atoms in CoCrFeNiTa high entropy alloys: Effect on microstructure and mechanical properties", MATERIALS LETTERS, vol. 297, 1 August 2021 (2021-08-01), page 129966, XP93204564, AMSTERDAM, NL ISSN: 0167-577X, DOI: 10.1016/j.matlet.2021.129966 | 1-3,5, 8-13 | INV. C22C1/04 C22C27/02 C22C30/00 C22C30/02 C22C30/06 C22C33/02 B33Y70/00 |
| A | * 2. Experiment * | 4,6,7 | |
| | ----- | | |
| X | CN 113 046 615 A (UNIV WENZHOU) 29 June 2021 (2021-06-29) | 1-3,5, 8-13 | |
| A | * claims * | 4,6,7 | |
| | ----- | | |

**TECHNICAL FIELDS SEARCHED (IPC)**

C22C
B33Y

The present search report has been drawn up for all claims

| Place of search | Date of completion of the search | Examiner |
|---|---|---|
| The Hague | 12 September 2024 | Morra, Valentina |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 30 5477

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2024

| Patent document cited in search report | Publication date | Patent family member(s) | Publication date |
|---|---|---|---|
| CN 113046615 A | 29-06-2021 | NONE | |

For more details about this annex : see Official Journal of the European Patent Office, No. 12/82